# EUROPÄISCHE PATENTSCHRIFT

(11) **EP 0 980 081 B1**
(45) Veröffentlichungstag und Bekanntmachung des Hinweises auf die Patenterteilung: **18.06.2003**
(21) Anmeldenummer: 99113223.4
(22) Anmeldetag: 08.07.1999
(51) Int. Cl.: H01F 7/02, H02K 1/27, G01P 3/487

(54) **Hochgefülltes Kunststoffteil**
Resinous part with high rate of filling
Pièce en résine à haut taux de remplissage

(30) Priorität: 12.08.1998 DE 19836451
(43) Veröffentlichungstag der Anmeldung: 16.02.2000
(73) Patentinhaber: Max Baermann GmbH, 51429 Bergisch-Gladbach (DE)
(72) Erfinder: Schwarz, Manfred, 51688 Wipperfürth (DE)
(74) Vertreter: Patentanwälte Lippert, Stachow, Schmidt & Partner

(56) Entgegenhaltungen:
- DE-A- 3 636 039
- DE-A- 19 625 478
- DE-U- 8 614 601

## Beschreibung

Die Erfindung betrifft ein hochgefülltes Kunststoffteil, z. B. einen Dauermagneten, mit einem Grundkörper, wobei das Kunststoffteil an dem Grundkörper befestigt ist und der Grundkörper zur Befestigung des Kunststoffteils mindestens ein laschenförmiges Teil aufweist, sowie ein Verfahren zur Herstellung eines hochgefüllten Kunststoffteils mit einem Grundkörper.

Bei hochgefüllten Kunststoffteilen handelt es sich um Teile, bei denen ein Material in einer Kunststoffmatrix eingebettet ist. Als Einbettungsmaterial kommen zum Beispiel dauermagnetische Partikel zur Herstellung eines kunststoffgebundenen Dauermagneten, weich magnetische Partikel, deren magnetische Eigenschaften sich durch die umgebenden elektromagnetischen Felder bestimmen, keramische Pulver, z.B. zur Herstellung von Dichtscheiben, sowie andere pulver- oder partikelförmige Materialien in Betracht. Derartige hochgefüllte Kunststoffteile werden meist durch Spritzgießverfahren hergestellt. Dabei kann das Kunststoffteil an den Grundkörper angespritzt oder nach seiner Herstellung kraftschlüssig oder durch eine Klebeverbindung am Grundkörper befestigt werden. In vielen Fällen sind an die Befestigung besondere Sicherheitsanforderungen zu stellen, denen rein kraftschlüssige Verbindungen oder Klebeverbindungen nicht genügen.

Bei formschlüssigen Verbindungen, insbesondere beim Anspritzen des Kunststoffteils an den Grundkörper treten nach dem Erkalten des hochgefüllten Kunststoffs Schrumpfspannungen auf, die im Verbindungsbereich zum Abreißen des Kunststoffteils vom Grundkörper führen können.

Dieses Problem tritt zum Beispiel bei kunststoffgebundenen Dauermagneten auf, die als Motor- oder Sensormagnete auf einer Welle zu befestigen sind. Hierzu wird der Grundkörper, auf den der kunststoffgebundene Dauermagnet befestigt ist, mit Preßsitz auf der betreffenden Welle angeordnet. Die als Motor- oder Sensormagnete eingesetzten Dauermagnete sind meist als Ringoder Scheibenmagnete ausgebildet, die auf einem ebenfalls ringoder buchsenförmigen Grundkörper befestigt sind.

Derartige kunststoffgebunde Dauermagnete werden in vielen Gebieten der Technik zunehmend eingesetzt. So geht man zum Beispiel in der Automobiltechnik dazu über, hydraulische Unterstützungsfunktionen, wie zum Beispiel bei der Servolenkung, aus Energiespargründen durch elektromotorische zu ersetzen. An die Befestigung des Sensormagneten an der betreffenden Welle, zum Beispiel der Lenkradsäule, werden besondere Sicherheitsanforderungen gestellt. So verlangen die technischen Überwachungsvereine eine kraft- oder formschlüssige Verbindung, da Klebeverbindungen keine dauerhaft sichere Befestigung gewährleisten.

Ein Dauermagnet der eingangs genannten Art ist aus der DE 86 14 601 U bekannt. Zur vorübergehenden Sicherung eines ringförmigen Rotormagneten auf einer Welle ist an seinem Innenumfang ein gabelförmiger Klemmhaken mit einer nach innen (zur Welle) gerichteten federnden Klemmnase vorgesehen. Der Klemmhaken weist eine radial nach außen gerichtete Rastnase auf, die hinter einen Rastvorsprung des Rotormagneten greift. Beim Aufschieben des mit dem Klemmhaken versehenen Rotormagneten auf eine Welle werden radiale Spreizkräfte vom Klemmhaken auf den Magneten übertragen.

Aus der DE-PS 704 000 ist ein Dauermagnet bekannt, der an einem Grundkörper mittels umgebogener Laschen befestigt ist, wobei evtl. Toleranzen in den Abmessungen des Dauermagneten gegenüber dem Grundkörper kompensiert werden.

Ist ein solcher Dauermagnet als hochgefülltes Kunststoffteil ausgebildet, so treten die vorstehend beschriebenen Probleme auf. So kommt es beim Erkalten eines thermoplastisch gebundenen Magnetmaterials zu einer Schrumpfung, die z. B. 0,5% des Volumens betragen kann. Aufgrund dabei auftretender Schrumpfspannungen kann der Magnet vom Grundkörper abreißen.

Die US 5 530 344 , die ein hochgefülltes kunstoffteil gemäß dem Obergriff des Anspruchs 1 und ein Verfahren zur Herstellung gemäß dem Obergriff des Anspruchs 11 beschreibt, offenbart eine Codiereinrichtung für ein Kugellager, die mit einem Sensor zur Ermittlung der Rotationsgeschwindigkeit des Lagers zusammenwirkt. Dazu dient ein axial magnetisierter dipolarer Ring, der mit gleichmäßig über seinen Umfang verteilten, radial verlaufenden Vorsprüngen versehen ist. Der Dauermagnet wird von einem ringscheibenförmigen Grundkörper mit fensterartigen Ausnehmungen gehalten, die die Vorsprünge aufnehmen. Durch eine Dichtungsvorrichtung wird der Dauermagnet zusätzlich am Grundkörper befestigt.

Aus der DE-PS 966 719 ist ein Dauermagnet, insbesondere für Fahrradlichtmaschinen bekannt, der in einem gesonderten Arbeitsgang mit einer Welle verbunden wird. Dazu wird ein zwischen dem Dauermagneten und der Welle bestehender Zwischenraum mit Metall ausgegossen. Die zentrale Bohrung des Dauermagneten weist an einem oder an beiden Enden Vertiefungen auf, die durch beim Ausgießen mit Metall sich bildenden Endflanschen ausgefüllt werden und eine Verschiebesicherung in Längsrichtung der Welle bilden.

In der DE-AS 1 043 540 wird ein Dauermagnet beschrieben, der aus porösem Werkstoff besteht und in seiner Bohrung eine mittels Kunstharzkittes befestigte Buchse aus nichtgesintertem keramischen Werkstoff aufweist. Die Buchse ist auf einer Welle mit Äthoxylinharzkitt befestigt. Auch hier werden Dauermagnet, Buchse und Welle in gesonderten Arbeitsgängen miteinander verbunden.

Aus der DE-OS 1 614 183 geht ein kunststoffgebundener hohlzylinderförmiger Dauermagnet hervor, der zur federnden Befestigung aus bzw. in einem hohlzylinderförmigen Grundkörper einen Längsschlitz aufweist. Auch hier erfolgt die Verbindung von Dauermagnet und Grundkörper in einem gesonderten Arbeitsgang. Der Dauermagnet ist auf dem Grundkörper nicht fixiert, so daß er sich vom Grundkörper lösen kann.

Die DE 92 16 750 U1 offenbart einen Rotormagneten aus kunststoffgebundenem Magnetmaterial mit einem eingespritzten, buchsenförmigen Grundkörper. Um beim Aufpressen des Rotormagneten auf eine Welle Spannungen im Magneten zu reduzieren, weist der Grundkörper im mittleren Bereich seines Außenumfangs eine Einschnürung auf.

Bei den vorstehend beschriebenen Konstruktionen kommt es bei Dauermagneten mit kunststoffgebundenem Magnetmaterial aufgrund der beim Erkalten auftretenden Schrumpfspannungen zum Problem des Abreißens vom Grundkörper.

Wie vorstehend erwähnt, betrifft dieses Problem allgemein die formschlüssige Verbindung zwischen einem hochgefüllten Kunststoffteil und einem Grundkörper.

Der Erfindung liegt daher die Aufgabe zugrunde, eine abreißsichere formschlüssige Verbindung zwischen dem Dauermagneten und dem Grundkörper zu schaffen.

Die Aufgabe wird erfindungsgemäß dadurch gelöst, dass das laschenförmige Teil mit dem hochgefüllten Kunststoff des Kunststoffteils umgeben und sich in das Kunststoffteil hineinerstreckt, wobei es Schrumpfspannungen des hochgefüllten Kunststoffs nach Herstellung des Kunststoffteils durch Verbiegen zumindest teilweise aufnimmt.

Aufgrund der erfindungsgemäßen Maßnahme werden Schrumpfspannungen im hochgefüllten Kunststoff um die laschenförmigen Teile herum bei Erkalten des Kunststoffs vollständig oder zumindest so weitgehend vermieden, dass ein Abreißen des Kunststoffteils vom Grundkörper vermieden wird.

Insbesondere dann, wenn es sich bei dem hochgefüllten Kunststoffteil um einen Motormagneten oder Sensormagneten handelt. Das Kunststoffteil ist vorzugsweise als Ring- oder Scheibenmagnet ausgebildet, wobei der Grundkörper ein buchsenförmiges Teil zur Befestigung an einer Welle und ein sich nach außen erstreckendes Flanschteil aufweist. An dem Flanschteil sind das oder die laschenförmigen Teile so angeordnet, dass sie zur Längsrichtung des Grundkörpers hin geneigt sind. Aufgrund dieser Anordnung des oder der laschenförmigen Teile werden Schrumpfspannungen des kunststoffgebundenen Magnetmaterials durch Verbiegung dieser Teile aufgenommen. Zweckmäßigerweise sind mehrere bevorzugt gleichmäßig über den Umfang des Flanschteils verteilte laschenförmige Teile vorgesehen.

In einer bevorzugten Weiterbildung der Erfindung besteht das Flanschteil aus einem sich an das buchsenförmige Teil anschließenden in etwa radial verlaufenden ringförmigen Bereich, der über den Umfang verteilte Durchbrüche aufweist, an deren radial innen- oder außenliegenden Rändern die laschenförmigen Teile angeordnet sind. Die Durchbrüche sind zweckmäßigerweise durch den hochgefüllten Kunststoff ausgefüllt, was die formschlüssige Anbindung des Kunststoffteils an den Grundkörper verbessert. Im Bereich der Durchbrüche treten Schrumpfspannungen gegenüber dem außerhalb liegenden Volumen des hochgefüllten Kunststoffs bei dessen Erkalten auf, die jedoch durch die biegsamen Laschen aufgenommen werden und sich dadurch kompensieren.

In einer anderen Ausführung weist das Flanschteil einen sich an das buchsenförmige Teil anschließenden im wesentlichen radial verlaufenden ringförmigen Bereich auf, an dem die laschenförmigen Teile über den Umfang verteilt angeordnet sind. Die laschenförmigen Teile erstrecken sich ausgehend vom ringförmigen Bereich in Längsrichtung des Grundkörpers geneigt strahlenförmig mit dazwischenliegenden Ausnehmungen.

Die Durchbrüche bzw. Ausnehmungen gewährleisten die Verdrehsicherheit des Kunststoffteils auf dem Grundkörper. Die vom ringförmigen Bereich umgebenen Durchbrüche sichern die Befestigung des Kunststoffteils darüber hinaus besser gegen radiale Kräfte. Die axiale Befestigungssicherheit ist durch den radial verlaufenden ringförmigen Bereich und die daran anschließenden sich in einer Komponente ebenfalls radial erstreckenden laschenförmigen Teile gewährleistet.

Die laschenförmigen Teile können sich bei der vorstehend genannten Ausführung auch direkt an das buchsenförmige Teil des Grundkörpers, d. h. ohne Zwischenanordnung des ringförmigen Teils, anschließen.

Bei einem buchsenförmigen Grundkörper mit ringförmigem Bereich des Flanschteils ist der Dauermagnet vorzugsweise an der Stirnseite des ringförmigen Bereichs angeordnet, an dem die laschenförmigen Teile zur Längsrichtung des Grundkörpers hin geneigt vorstehen.

Obwohl die Erfindung insbesondere zur Befestigung von ringoder scheibenförmigen Kunststoffteilen, wie z.B. kunststoffgebundenen Dauermagneten, an einem entsprechend buchsenförmig ausgebildeten Grundkörper geeignet ist, kann sie jedoch für beliebige hochgefüllte Kunststoffteile der eingangs genannten Art, die an einem Grundkörper befestigt sind, eingesetzt werden.

Bei kunststoffgebundene Dauermagneten kann es sich dabei um isotrope oder anisotrope Magnete handeln. Diese können als Binder für die eingebetteten DauermagnetPartikel thermoplastische oder auch duroplastische Kunststoffe aufweisen.

Der Grundkörper kann einstückig ausgebildet sein. Er besteht vorzugsweise aus Metall oder Kunststoff, wobei die Materialzusammensetzung und Materialstärke zumindest im Bereich der laschenförmigen Teile die Aufnahme der beim Erkalten des Magnetmaterials entstehenden Schrumpfspannungen durch Verbiegen erlaubt.

Der Grundkörper kann als Stanz-Biegeteil, Drehteil oder in Fügetechnik hergestellt werden.

Wie aus den vorstehenden Erläuterungen hervorgeht, umfasst die Erfindung ein Verfahren zur Herstellung eines hochgefüllten Kunststoffteils mit einem Grundkörper, wobei das Kunststoffteil an dem Grundkörper durch mindestens ein laschenförmiges Teil befestigt wird und zur Herstellung des Kunststoffteils das laschenförmige Teil erfindungsgemäß mit dem hochgefüllten Kunststoff umgeben und im hochgefüllten Kunststoff so angeordnet wird, dass es sich in den Kunststoffteil hineinerstrecken wird, wobei Schrumpfspannungen des hochgefüllten Kunststoffs nach Herstellung des Kunststoffteils durch Verbiegen zumindest teilweise aufgenommen werden.

In einer bevorzugten Ausführung des Verfahrens wird das laschenförmige Teil zur Herstellung des Kunststoffteils mit dem hochgefüllten Kunststoff umspritzt und im hochgefüllten Kunststoff so angeordnet, dass es Schrumpfspannungen des hochgefüllten Kunststoffs nach Erkalten des Kunststoffs durch Verbiegen zumindest teilweise aufnimmt.

Bevorzugte Ausführungsbeispiele der Erfindung werden im Folgenden anhand der Zeichnung näher beschrieben.

In der Zeichnung zeigen:
- Fig. 1: einen Querschnitt jeweils in der oberen und unteren Hälfte eines Ausführungsbeispiels,
- Fig. 2: eine stirnseitige Ansicht der in Fig. 1 dargestellten Ausführungsbeispiele in Richtung des Pfeils II,
- Fig. 3: einen Querschnitt durch ein drittes Ausführungsbeispiel, bei dem nur die obere Symmetriehälfte gezeigt ist, und
- Fig. 4: eine stirnseitige Ansicht des in Fig. 3 dargestellten Ausführungsbeispiels in Richtung des Pfeils IV.

Wie aus der Zeichnung hervorgeht, ist ein kunststoffgebundener Dauermagnet 1, 2 bzw. 3 mit einem Grundkörper 4, 5 bzw. 6 verbunden, mit dem der Dauermagnet an einem (in der Zeichnung nicht dargestellten) beweglichen Basisteil befestigbar ist. Der Grundkörper 4, 5 bzw. 6 weist mehrere laschenförmige Teile 7, 8 bzw. 9 auf, die mit dem kunststoffgebundenen Magnetmaterial umspritzt sind und den Dauermagneten bei der Bewegung des Basisteils sicher halten.

Wie im folgenden anhand der Ausführungsbeispiele noch näher erläutert wird, sind die laschenförmigen Teile 7, 8 bzw. 9 des Grundkörpers 4, 5 bzw. 6 im kunststoffgebundenen Magnetmaterial so angeordnet, daß sie die Schrumpfspannung des kunststoffgebundenen Magnetmaterials bei dessen Erkalten nach dem Spritzgießvorgang durch Verbiegen zumindest teilweise aufnehmen.

Die in den Ausführungsbeispielen gezeigten Dauermagnete 1, 2 bzw. 3 sind als Ringmagnete ausgebildet, wobei der Grundkörper 4, 5 bzw. 6 zur Befestigung an einer Welle ein buchsenförmiges Teil 10 aufweist. Der Ringmagnet ist an einer Stirnseite des buchsenförmigen Teils 10 angeordnet. Der Innendurchmesser des buchsenförmigen Teils 10 ist kleiner als der Innendurchmesser des Ringmagneten, so daß bei Befestigung des buchsenförmigen Teils 10 auf einer Welle, zum Beispiel mit Preßsitz, keine Spannungen auf den Ringmagneten übertragen werden können.

An das buchsenförmige Teil 10 des Grundkörpers 4, 5 bzw. 6 schließt sich an der dem Ringmagneten zugewandten Stirnseite ein sich nach außen erstreckendes Flanschteil 11, 12 bzw. 13 an, das die laschenförmigen Teile 7, 8 bzw. 9 aufweist. Die laschenförmigen Teile 7, 8 bzw. 9 sind so angeordnet, daß sie zur Längsrichtung des Grundkörpers 4, 5 bzw. 6 hin geneigt sich in den Ringmagneten hineinerstrecken. Aufgrund dieser Anordnung werden beim Erkalten des kunststoffgebundenen Magnetmaterials auftretende Schrumpfspannungen, die im wesentlichen radial nach innen gerichtet sind, von den laschenförmigen Teilen 7, 8 bzw. 9 durch Verbiegen in Richtung der Schrumpfspannungen aufgenommen, so daß ein Abreißen des Magneten im Bereich der laschenförmigen Teile vermieden wird.

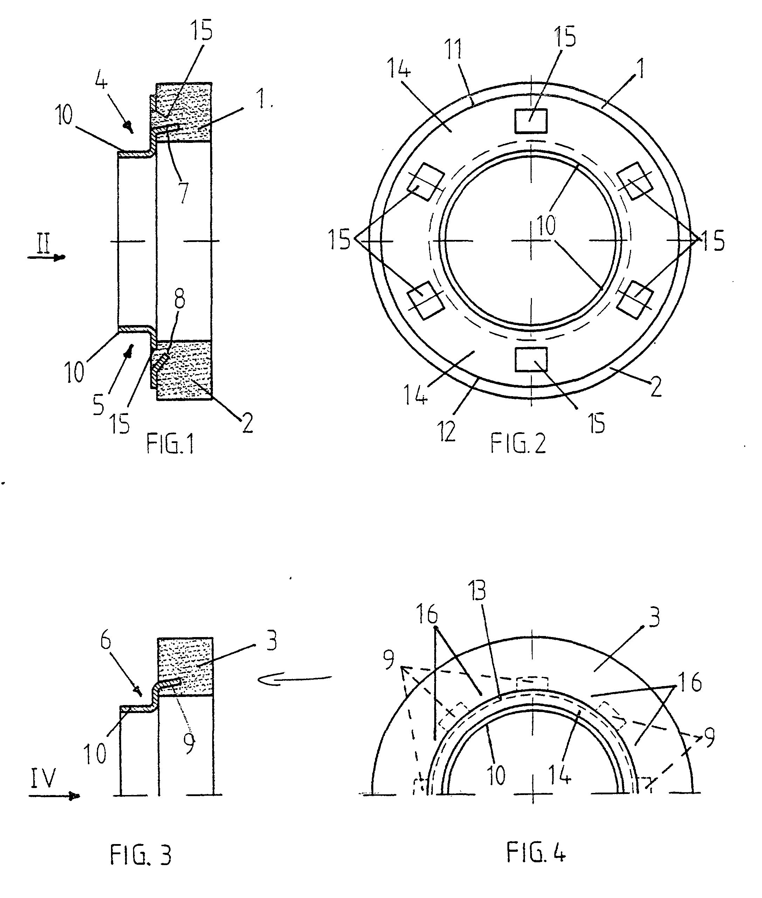

Bei den beiden in den Figuren 1 und 2 gezeigten Ausführungsbeispielen besteht das Flanschteil 11 bzw. 12 aus einem sich an das buchsenförmige Teil 10 anschließenden radial verlaufenden ringförmigen Bereich 14, der gleichmäßig über den Umfang verteilte Durchbrüche 15 aufweist. Die Durchbrüche sind durch Ausstanzen der laschenförmigen Teile 7 bzw. 8, die jedoch an einem Rand mit dem ringförmigen Bereich 14 verbunden sind, und Verbiegen der laschenförmigen Teile um diesen Rand in der vom buchsenförmigen Teil 10 wegweisenden Richtung hergestellt.

Die Durchbrüche 15 bzw. die laschenförmigen Teile 7, 8 bzw. 9 sind im wesentlichen rechteckig und in den betreffenden Winkellagen orientiert.

Bei dem in der oberen Hälfte der Figuren 1 und 2 dargestellten Ausführungsbeispiel sind die laschenförmigen Teile 7 an den radial innenliegenden Rändern der Durchbrüche 15 mit dem ringförmigen Bereich 14 verbunden und an diesen Rändern umgebogen. Die beim Erkalten des kunststoffgebundnen Magnetmaterials auftretenden Schrumpfspannungen führen zu einem weiteren Verbiegen der laschenförmigen Teile 7 in deren ursprünglicher Biegerichtung.

Bei dem in der unteren Hälfte der Figuren 1 und 2 gezeigten Ausführungsbeispiel sind die laschenförmigen Teile 8 an den radial außenliegenden Rändern der Durchbrüche 15 mit dem ringförmigen Bereich 14 verbunden. Aufgrund der beim Erkalten des kunststoffgebundenen Magnetmaterials auftretenden Schrumpfspannungen werden die laschenförmigen Teile 8 entgegen der ursprünglichen Biegerichtung bewegt.

In den beiden betrachteten Fällen können je nach Material und Stärke des Grundkörpers 4 bzw. 5 unterschiedliche Biegewiderstände der laschenförmigen Teile 7 bzw. 8 vorliegen, die der erforderlichen Aufnahme der Schrumpfspannungen des kunststoffgebundenen Magnetmaterials geeignet angepaßt werden können.

Wie aus Fig. 1 hervorgeht, sind die Durchbrüche 15 vom kunststoffgebundenen Magnetmaterial ausgefüllt. Ohne die daran angrenzenden in Längsrichtung des Grundkörpers 4 bzw. 5 geneigten laschenförmigen Teile 7 bzw. 8 könnten die beim Erkalten des kunststoffgebundenen Magnetmaterials auftretenden Schrumpfspannungen zu einem Abreißen des Magnetkörpers an den Durchbrüchen führen. Die laschenförmigen Teile 7 bzw. 8 sowie die Durchbrüche 15 gewährleisten einen optimalen Halt gegen axiales und radiales Verschieben sowie gegen Verdrehen des Dauermagneten 1 bzw. 2 auf dem Grundkörper 4 bzw. 5, wobei eine ebenfalls optimale Sicherheit gegen Abreißen des Magnetkörpers im Bereich dieser Befestigungen gegeben ist.

Bei dem in den Figuren 3 und 4 gezeigten Ausführungsbeispiel weist das Flanschteil 13 einen sich an das buchsenförmige Teil 10 anschließenden radial verlaufenden ringförmigen Bereich 14 auf, an dem die laschenförmigen Teile 9 über den Umfang verteilt angeordnet sind. Die laschenförmigen Teile 9 erstrecken sich in zur Längsrichtung des Grundkörpers 6 geneigter Richtung vom buchsenförmigen Teil 10 weg in den Magnetkörper. Die laschenförmigen Teile 9 sind ebenfalls im wesentlichen rechteckig ausgebildet und in den betreffenden Winkellagen orientiert. Zwischen den laschenförmigen Teilen 9 weist das Flanschteil 13 größere sich über den Umfang erstreckende Ausnehmungen 16 auf, die mit dem kunststoffgebundnen Magnetmaterial ausgefüllt sind.

Bei den betrachteten Ausführungsbeispielen sind die Grundkörper 4, 5 bzw. 6 einstückig als Stanz-Biegeteile aus einem geeigneten Metallwerkstoff hergestellt.

### Bezugszeichenliste

- 1: Dauermagnet
- 2: Dauermagnet
- 3: Dauermagnet
- 4: Grundkörper
- 5: Grundkörper
- 6: Grundkörper
- 7: laschenförmiges Teil
- 8: laschenförmiges Teil
- 9: laschenförmiges Teil
- 10: buchsenförmiges Teil
- 11: Flanschteil
- 12: Flanschteil
- 13: Flanschteil
- 14: ringförmiger Bereich
- 15: Durchbruch
- 16: Ausnehmung

## Patentansprüche

1. Hochgefülltes Kunststoffteil mit einem Grundkörper (4; 5; 6), wobei das Kunststoffteil an dem Grundkörper (4; 5; 6) befestigt ist und der Grundkörper (4; 5; 6) zur Befestigung des Kunststoffteils mindestens ein laschenförmiges Teil (7; 8; 9) aufweist, **dadurch gekennzeichnet,dass** das laschenförmige Teil (7; 8; 9) mit dem hochgefüllten Kunststoff des Kunststoffteils umgeben und sich in den Kunststoffteil hineinerstreckt, wobei es Schrumpfspannungen des hochgefüllten Kunststoffs nach Herstellung des Kunststoffteils durch Verbiegen zumindest teilweise aufnimmt.

2. Hochgefülltes Kunststoffteil mit einem Grundkörper (4; 5; 6) nach Anspruch 1, **dadurch gekennzeich**n e t, daß das Kunststoffteil ring- oder scheibenförmig ausgebildet ist und der Grundkörper (4; 5; 6) ein buchsenförmiges Teil (10) zur Befestigung an einer Welle und ein sich nach außen erstreckendes Flanschteil (11; 12; 13) aufweist, an dem das laschenförmige Teil (7; 8; 9) so angeordnet ist, dass es zur Längsrichtung des Grundkörpers (4; 5; 6) hin geneigt ist.

3. Hochgefülltes Kunststoffteil mit einem Grundkörper (4; 5; 6) nach Anspruch 2, **dadurch gekennzeich**n e t, daß am Flanschteil (11; 12; 13) mehrere über dessen Umfang verteilte laschenförmige Teile (7; 8; 9) angeordnet sind.

4. Hochgefülltes Kunststoffteil mit einem Grundkörper (4; 5; 6) nach Anspruch 3, **dadurch gekennzeich**n e t, daß das Flanschteil (11; 12) aus einem sich an das buchsenförmige Teil (10) anschließenden im wesentlichen radial verlaufenden ringförmigen Bereich (14) besteht, der über den Umfang verteilte Durchbrüche (15) aufweist, an deren radial innen- oder außenliegenden Rändern die laschenförmigen Teile (7; 8) angeordnet sind, und der hochgefüllte Kunststoff die Durchbrüche (15) ausfüllt.

5. Hochgefülltes Kunststoffteil mit einem Grundkörper (4; 5; 6) nach Anspruch 3, **dadurch gekennzeich**n e t, daß das Flanschteil (13) einen sich an das buchsenförmige Teil (10) anschließenden im wesentlichen radial verlaufenden ringförmigen Bereich (14) aufweist, an dem die laschenförmigen Teile (9) über den Umfang verteilt angeordnet sind.

6. Hochgefülltes Kunststoffteil mit einem Grundkörper (4; 5; 6) nach Anspruch 4 oder 5, **dadurch gekennzeichnet,daß** das Kunststoffteil an der Stirnseite des ringförmigen Bereichs (14) des Flanschteils (11; 12; 13) angeordnet ist, an dem die laschenförmigen Teile (7; 8; 9) zur Längsrichtung des Grundkörpers (4; 5; 6) hin geneigt vorstehen.

7. Hochgefülltes Kunststoffteil mit einem Grundkörper (4; 5; 6) nach einem der Ansprüche 1 bis 6, **dadurch ge** **kennzeichnet,daß** der Grundkörper (4; 5; 6) aus Metall besteht.

8. Hochgefülltes Kunststoffteil mit einem Grundkörper (4; 5; 6) nach einem der Ansprüche 1 bis 6, **dadurch gekennzeichnet,daß** der Grundkörper aus Kunststoff besteht.

9. Hochgefülltes Kunststoffteil mit einem Grundkörper (4; 5; 6) nach einem der Ansprüche 1 bis 8, **dadurch gekennzeichnet,daß** das Kunststoffteil als kunststoffgefüllter Dauermagnet (1; 2; 3) ausgebildet ist.

10. Hochgefülltes Kunststoffteil mit einem Grundkörper (4; 5; 6) nach einem der Ansprüche 1 bis 8, **dadurch gekennzeichnet,daß** das Kunststoffteil als kunststoffgebundener Magnet ausgebildet ist.

11. Verfahren zur Herstellung eines hochgefüllten Kunststoffteils mit einem Grundkörper (4; 5; 6), wobei das Kunststoffteil an dem Grundkörper (4; 5; 6) durch mindestens ein laschenförmiges Teil (7; 8; 9) befestigt wird, **dadurch gekennzeichnet, dass** das laschenförmige Teil (7; 8; 9) mit dem hochgefüllten Kunststoff umgeben und im Hochgefüllten Kunststoff so angeordnet wird, dass es sich in den Kunststoffteil hineinerstrecken wird, wobei Schrumpfspannungen des hochgefüllten Kunststoffs nach Herstellung des Kunststoffteils durch Verbiegen zumindest teilweise aufgenommen werden.

12. Verfahren nach Anspruch 11, **dadurch gekennzeichnet,daß** zur Herstellung des Kunststoffteils das laschenförmige Teil (7; 8; 9) mit dem hochgefüllten Kunststoff umspritzt und im hochgefüllten Kunststoff so angeordnet wird, daß es Schrumpfspannungen des hochgefüllten Kunststoffs nach Erkalten des Kunststoffs durch Verbiegen zumindest teilweise aufnimmt.

## Claims

1. High-grade plastic component with a basic body (4; 5; 6), with the plastic component being fixed to the basic body (4; 5; 6) and the basic body (4; 5; 6) showing at least one strap-shaped part (7; 8; 9), **characterized in that** the strap-shaped part (7; 8; 9) is surrounded with the high-grade plastic of the plastic component and extends into the plastic component, thus taking up contraction strains of the high-grade plastic after manufacture of the plastic component at least partly by bending.

2. High-grade plastic component with a basic body (4; 5; 6) according to claim 1, **characterized in that** the plastic component is laid out ring- or disk-shaped and the basic body (4; 5; 6) shows a bush-shaped part (10) for fixing it to a shaft and a flange part (11; 12; 13) which extends to the outside at which the strap-shaped part (7; 8; 9) is arranged in such a way that it inclines towards the longitudinal direction of the basic body (4; 5; 6).

3. High-grade plastic component with a basic body (4; 5; 6) according to claim 2, **characterized in that** several strap-shaped parts (7; 8; 9) are distributed along the circumference of the flange part (11; 12; 13).

4. High-grade plastic component with a basic body (4; 5; 6) according to claim 3, **characterized in that** adjoining the bush-shaped part (10) is the flange part (11; 12) consisting of a mainly radially running ringshaped area(14) which shows openings (15) distributed along the circumference and the strap-shaped parts (7; 8) which are arranged at the radially inside or outside located edges and the high-grade plastic filling the openings (15).

5. High-grade plastic component with a basic body (4; 5; 6) according to claim 3, **characterized in that** adjoining the bush-shaped part (10) is the flange part (13) consisting of a mainly radially running ringshaped area (14) with the strap-shaped parts (9) being distributed along the circumference.

6. High-grade plastic component with a basic body (4; 5; 6) according to claim 4 or 5, **characterized in that** the plastic component is located at the frontof the ringshaped area (14) of the flange part (11; 12; 13) at which the strap-shaped parts (7; 8; 9) project inclining towards the longitudinal direction of the basic body (4; 5; 6).

7. High-grade plastic component with a basic body (4; 5; 6) according to one of the claims 1 to 6, **characterized in that** the basic body (4; 5; 6) is made of metal.

8. High-grade plastic component with a basic body (4; 5; 6) according to one of the claims 1 to 6, **characterized in that** the basic body is made of plastic.

9. High-grade plastic component with a basic body (4; 5; 6) according to one of the claims 1 to 8, **characterized in that** the plastic component is laid out as plastic-filled permanent magnet (1; 2; 3).

10. High-grade plastic component with a basic body (4; 5; 6) according to one of the claims 1 to 8, **characterized in that** the plastic component is laid out as plastic-bonded magnet.

11. Process for manufacturing a high-grade plastic component with a basic body (4; 5; 6), with the plastic component being fixed to the basic body (4; 5; 6) by at least one strap-shaped part (7; 8; 9), **characterized in that** the strap-shaped part (7; 8; 9) is surrounded by the high-grade plastic and is arranged within the high-grade plastic in such a way that it will extend into the plastic part, with the contraction strains of the high-grade plastic, which occur after the manufacture of the plastic part, being at least partly taken up by the bending.

12. Process according to claim 11, **characterized in that** for manufacturing the plastic component, the strap-shaped part (7; 8; 9) is injection-moulded with the high-grade plastic and is arranged within the high-grade plastic in such a way that the contraction strains of the high-grade plastic, which occur after cooling of the plastic, are at least partly taken up by bending.

## Revendications

1. Pièce en résine à haut taux de remplissage avec un corps de base (4; 5; 6), la pièce en résine étant fixée sur le corps de base (4; 5; 6) et le corps de base (4; 5; 6) présentant pour la fixation de la pièce en résine au moins une pièce en forme d'attache (7; 8; 9), **caractérisée en ce que** la pièce en forme d'attache (7; 8; 9) est entourée de résine à haut taux de remplissage et s'étend dans la pièce en résine absorbant, au moins partiellement, par flexion, les contraintes de retrait de la résine à haut taux de remplissage qui se produisent après la fabrication de la pièce en résine.

2. Pièce en résine à haut taux de remplissage avec un corps de base (4; 5; 6) selon la revendication 1, **caractérisée en ce que** la pièce en résine est réalisée sous forme d'anneau ou de disque et que le corps de base (4; 5; 6) présente une pièce en forme de douille (10) pour permettre la fixation sur un arbre et une pièce à bride (11; 12; 13) s'étendant vers l'extérieur, sur laquelle la pièce en forme d'attache (7; 8; 9) est disposée de manière à être inclinée dans le sens longitudinal du corps de base (4; 5; 6).

3. Pièce en résine à haut taux de remplissage avec un corps de base (4; 5; 6) selon la revendication 2, **caractérisée en ce que** plusieurs pièces en forme d'attache (7; 8; 9) sont réparties sur la circonférence de la pièce à bride (11; 12; 13).

4. Pièce en résine à haut taux de remplissage avec un corps de base (4; 5; 6) selon la revendication 3, **caractérisée en ce que** la pièce à bride (11; 12) est composée d'une zone en forme d'anneau (14), à mouvement principalement radial et contiguë à la pièce en forme de douille (10), cette zone présentant des ouvertures (15) réparties sur la circonférence et remplies de résine à haut taux de remplissage où sont réparties des pièces en forme d'attache (7; 8) disposées sur les bords radiaux intérieurs et extérieurs de ces ouvertures (15).

5. Pièce en résine à haut taux de remplissage avec un corps de base (4; 5; 6) selon la revendication 3, **caractérisée en ce que** la pièce à bride (13) est composée d'une zone en forme d'anneau (14), à mouvement principalement radial, et contiguë à la pièce en forme de douille (10) avec des pièces en forme d'attache (9) réparties sur la circonférence.

6. Pièce en résine à haut taux de remplissage avec un corps de base (4; 5; 6) selon la revendication 4 ou 5, **caractérisée en ce que** la pièce en résine est disposée sur le côté frontal de la zone en forme d'anneau (14) de la pièce à bride (11; 12; 13) au niveau de laquelle les pièces en forme d'attache (7; 8; 9) s'avancent en étant inclinées dans le sens longitudinal du corps de base (4; 5; 6).

7. Pièce en résine à haut taux de remplissage avec un corps de base (4; 5; 6) selon l'une quelconque des revendications 1 à 6, **caractérisée en ce que** le corps de base (4; 5; 6) est en métal.

8. Pièce en résine à haut taux de remplissage avec un corps de base (4; 5; 6) selon l'une quelconque des revendications 1 à 6, **caractérisée en ce que** le corps de base est en résine.

9. Pièce en résine à haut taux de remplissage avec un corps de base (4; 5; 6) selon l'une quelconque des revendications 1 à 8, **caractérisée en ce que** la pièce en résine est réalisée sous forme d'aimant permanent (1; 2; 3) rempli de résine.

10. Pièce en résine à haut taux de remplissage selon l'une quelconque des revendications 1 à 8, **caractérisée en ce que** la pièce en résine est réalisée sous forme d'aimant lié avec de la résine.

11. Procédé de fabrication d'une pièce en résine à haut taux de remplissage avec un corps de base (4; 5; 6), la pièce en résine étant fixée sur le corps de base (4; 5; 6) par au moins une pièce en forme d'attache (7; 8; 9), **caractérisée en ce que** la pièce en forme d'attache (7; 8; 9) est entourée de résine à haut taux de remplissage et est disposée dans la résine à haut taux de remplissage, de manière à ce qu'elle s'étende dans la pièce en résine absorbant, au moins partiellement, par flexion, les contraintes de retrait de la résine à haut taux de remplissage qui se produisent après la fabrication de la pièce en résine.

12. Procédé de fabrication selon la revendication 11, **caractérisée en ce que** la pièce en forme d'attache (7; 8; 9) utilisée pour la fabrication de la pièce en résine est recouverte de résine à haut taux de remplissage par moulage par injection et est disposée de telle manière dans la résine à haut taux de remplissage qu'elle absorbe, au moins partiellement, par flexion, les contraintes de retrait de la résine à haut taux de remplissage qui se produisent après le refroidissement de la résine.
